# EUROPEAN PATENT SPECIFICATION

(11) **EP 0 744 126 B1**
(45) Date of publication and mention of the grant of the patent: **22.12.1999**
(21) Application number: 96303654.6
(22) Date of filing: 22.05.1996
(51) Int. Cl.: A21C 3/02

(54) **Apparatus and method for feeding dough**
Vorrichtung und Verfahren zur Zufuhr von Teig
Appareil et procédé d'alimentation de pâte

(30) Priority: 22.05.1995 JP 14820795; 25.10.1995 JP 30194295
(43) Date of publication of application: 27.11.1996
(73) Proprietor: RHEON AUTOMATIC MACHINERY CO. LTD., Utsunomiya-shi Tochigi-ken (JP)
(72) Inventor: Hayashi, Torahiko, Utsunomiya-shi, Tochigi-ken (JP)
(74) Representative: Leale, Robin George

(56) References cited:
- EP-A- 0 140 458
- EP-A- 0 251 138
- EP-A- 0 311 240
- EP-A- 0 453 248
- EP-A- 0 545 725
- DE-A- 4 424 461

## Description

This invention relates to a method and an apparatus for continuously and uniformly feeding highly viscous and elastic dough through a narrow space at the bottom of a hopper during bread-making.

Dough is a fluid material with a high viscosity and elasticity due to its gel structure. This has prevented dough from being uniformly and continuously fed through a narrow space between oppositely rotating rolls located below a hopper containing a supply of dough.

In a known apparatus, to uniformly and continuously discharge dough from the bottom of a hopper, a piston and a cylinder are provided at the bottom of the hopper. Predetermined amounts of dough are repeatedly sucked by means of the piston into the cylinder, cut from the remaining dough and extruded by the piston from the cylinder. These steps are complex, and furthermore they repeatedly cause a shearing stress in the dough, so that it loses its elasticity. A chemical additive such as potassium bromide is therefore used to recover the elasticity before bread is made.

An arrangement of rolls that are horizontally and oppositely positioned is taught by Japanese Patent Publications Nos. 5-3253 and 6-37. Dough is continuously fed between the rolls, so that a web of dough is formed that has a constant thickness and width. However, this conventional apparatus cannot make a thin web of dough. Also, it does not completely eliminate the disadvantage of losing the elasticity of dough.

DE-A-4424461 discloses a method of feeding dough, comprising the steps of providing at least one horizontally opposed pair of feeding means that are rotatable in opposite directions to feed dough downwardly therebetween. The distance between the pair of feeding means may be adjusted manually using a handle.

The present invention is characterised over DE-4424461 by repeatedly increasing and decreasing the distance between said pair of means as the dough is discharged through the gap between them thereby preventing shear stress in the dough at the entry point between the feeding means from being increased, and continuously discharging a web of dough having a substantially uniform thickness through the gap between the pair of means.

Viewed from another aspect the invention provides apparatus for feeding dough, comprising at least one horizontally opposed pair of feeding means, which are rotatable in opposite directions to feed dough downwardly therebetween, characterised by means for repeatedly increasing and decreasing the distance between said pair of feeding means as the dough is discharged through the gap between them, whereby shear stress in the dough at the entry point between the rotatable means is prevented from being increased, and the dough is stably and continuously discharged through the gap between the pair of feeding means to form a web of dough that has a substantially uniform thickness.

Some embodiments of the invention will now be described by way of example and with reference to the accompanying drawings in which:-
Fig. 1 is a sectional view of a known apparatus;
Figs. 2 and 3 are sectional views of a first embodiment of the invention to illustrate its function;
Figs. 4 to 7 are sectional views of alternatives to the first embodiment;
Figs. 8 to 10 are sectional views of a second, third and fourth embodiments of the invention;
Figs. 11 to 14 are sectional views of a fifth embodiment; and
Figs. 15 and 16 are sectional views of sixth and seventh embodiments.

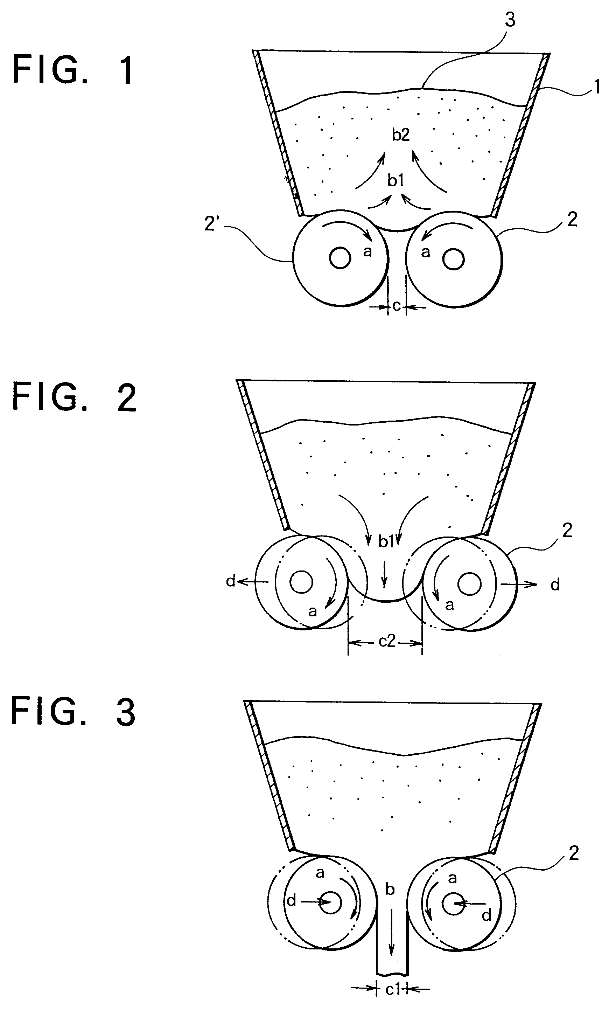

Fig. 1 illustrates a known apparatus. It includes a hopper 1 which stores dough 3. Rolls 2 and 2' are provided at the bottom of the hopper. They are opposite each other and have a gap c between them to feed the dough 3. However, this apparatus has problems in allowing the dough to be fed from the hopper.

Thus, a study has revealed that when the rolls 2 and 2' are rotated in the direction of arrows a, the dough in the hopper tends to flow in the directions of arrows b1 and b2. It is difficult for the dough to flow toward the gap c between the rolls 2 and 2'.

This phenomenon is caused by the two flows of the dough caused by the two rolls when they rotate in the directions of arrows a. That is, the two flows collide with each other, and then flow together in the directions of arrows b1 and b2, i.e. opposite to direction toward the gap c between the rolls 2 and 2'. The reason for this is that the stress in the dough at the gap is higher than that at the upper portion of the dough. The aim of the present invention is to reverse these stresses, i.e. to make the stress in the dough at the gap c lower than that in the upper portion of the dough, so that the dough can be stably fed through the gap.

Figs. 2 and 3 show a first embodiment of this invention. It again includes rolls 2 and 2'. However, the rolls are moved by a suitable means (not shown) to continually recede from and approach each other. The reversal of the stresses is carried out by periodically widening the gap c between the rolls, by moving them outwardly. The arrows d in Fig. 2 show the directions in which the rolls move outwardly. When the gap is widened to c2, as in Fig. 2, the stress at the position b1 in the dough decreases. As a result, the dough flows into the gap c2. When the gap is so widened, the rolls can feed the dough in the directions of the arrows a by the friction between the surfaces of the rolls and the dough. The stress at the position b1 decreases when the dough is so fed by the rolls, so that the dough can flow in the directions of the arrows a, and through the gap c, as in Fig. 3.

Then, the rolls are moved to return to their original positions, to form the narrow gap c1. As they move, the dough is pressed by them, so that the friction between the surfaces of the rolls and the dough increases. As shown by the reference b in Fig. 3, the dough is discharged through the gap. That is, when the gap of width c2 is narrowed to a gap of width c1, friction between the surfaces of the rolls and the dough is generated, so that the dough is discharged through the gap. By repeating such movement of the rolls a stable and continuous discharge of the dough can be achieved.

A study of the discharge of the dough found that the discharge rate of the dough in Fig. 3 was substantially the same as the circumferential speed of the rolls. Thus the widening and narrowing of the gap did not cause any substantial change in the amount of the material discharged through the gap.

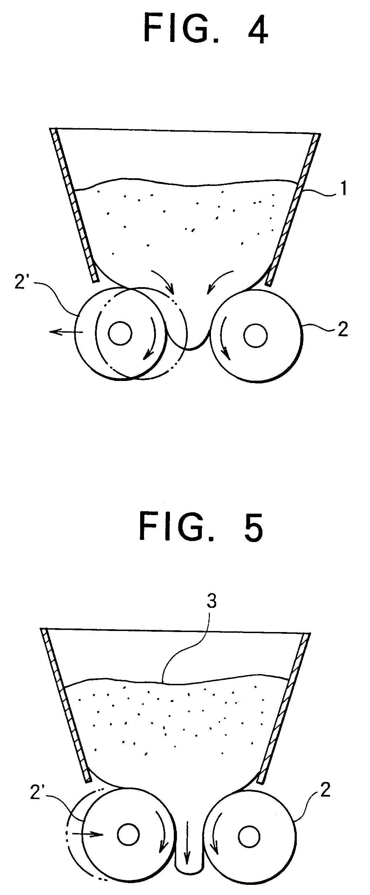

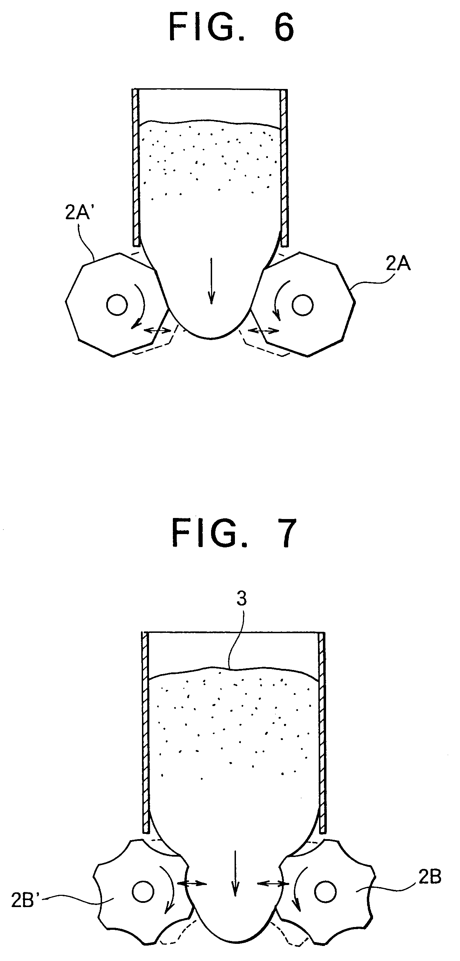

In this first embodiment of the invention, the rolls 2 and 2' reciprocate linearly as the gap c is widened and narrowed. Alternatively, as in the embodiment of Figs. 4 and 5, the roll 2 may be fixed in position while the roll 2' reciprocates. The cross-sectional shapes of the rolls is not limited to being circular. For example the rolls can be polygonal like the rolls 2A and 2A' in Fig. 6, polygonal with rounded corners (not shown), or with concave or convex portions like the rolls 2B and 2B' in Fig. 7.

As stated above, in the first embodiment the rolls 2,2' reciprocate linearly. However, the rolls can be made to swing so as to widen and narrow the gap through which dough is discharged. Such rolls can generate effects similar to those of the rolls 2,2'.

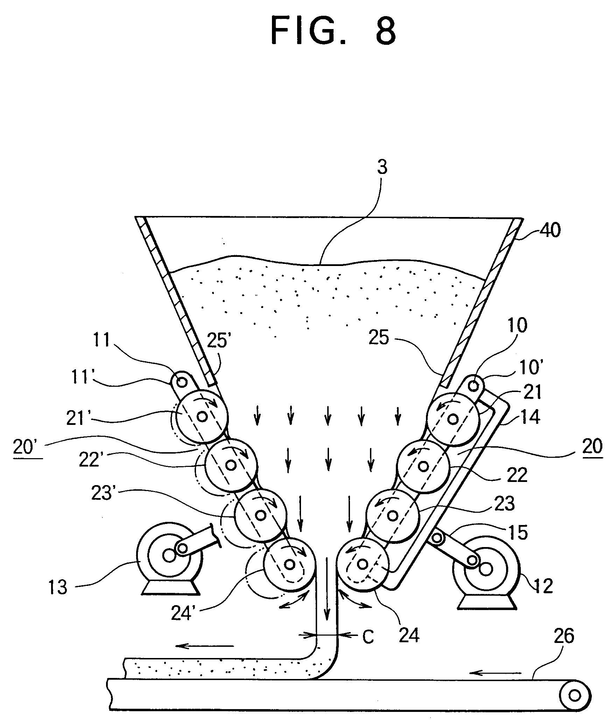

A second embodiment of the invention is shown in Fig. 8. This has additional advantages over the first embodiment. Elements similar to those of the first embodiment are denoted by the same references.

A group of pressing rolls 21, 22, 23, and 24 are arranged opposite to a group of pressing rolls 21', 22', 23', and 24'. These rolls are rotated by a driving means (not shown). The circumferential speeds of the lower rolls of the groups are higher than those of the upper rolls, so that the dough 3 is effectively moved downwards and formed into a web of dough. It is then fed by a conveyor 26 for subsequent processing.

The rolls 21 to 24 are mounted on a swinging arm 10' as a group 20. The arm 10' is swingable around a shaft 10. Similarly, the rolls 21' to 24' are mounted on a swinging arm 11' as a group 20'. The arm 11' is swingable around a shaft 11. The swinging movement of the rolls of the group 20 is caused by a motor 12 through a swinging bar 14 and a crank 15. The group 20' is similarly swung by means of a motor 13.

The arms 10' and 11' are arranged to form a V and positioned at the bottom of a hopper 40, between the lower ends of opposite walls 25, 25'. A gap C is defined between the bottom ends of these arms, through which the dough is to be discharged. The size of the gap C is changed when the rolls 21 to 24 and the rolls 21' to 24' are swung by the motors 12, 13 to recede from or approach each other. The range and rate of the swinging movement are controlled by the motors 12 and 13.

Thus, as already mentioned, the groups of rolls 20,20' are arranged like a V. They are positioned at the lower opening of the hopper 40. The rotating speed of the lower rolls is higher than that of the upper rolls. The distances between the opposite lower rolls are smaller than those between the opposite upper rolls. The dough in the hopper 40 is supplied to the space between the groups of the rolls. The stress in the dough is stopped from increasing by repeatedly increasing and decreasing the distances between the opposite rolls, by means of the arms 10', 11', so that the dough can be stably discharged through the gap C.

The above described arrangement of a plurality of pairs of rolls allows the compression ratio to be greater than where one pair of rolls is used. Thus, this arrangement causes the discharging ability of the dough to be increased. When the dough is discharged through the gap, its discharge speed is the same as the circumferential speed of the lowest pair of rolls.

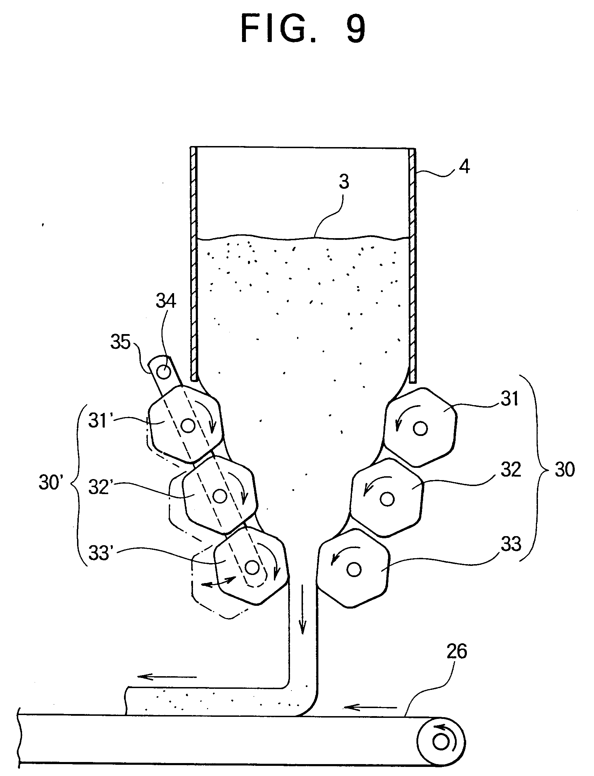

Fig. 9 shows a third embodiment of the invention. Elements of this embodiment that are similar to those of the second embodiment are denoted by the same references. In this third embodiment only one group of rolls is swingable to widen and narrow the distances between the rolls. Thus two groups of rolls 30, 30' is arranged like a V and is positioned below the hopper 4. The group of rolls 30 is fixed, while the group of rolls 30' can be swung around a shaft 34 by a swinging arm. To repeatedly increase and decrease the distances between the opposite rolls it is unnecessary to swing both the groups 30, 30'. The rotating speed of each roll in the group 30 can be controlled. The cross-sectional shape of each roll is hexagonal, but its corners are rounded. The groups of rolls 30, 30' comprise a group of three rolls 31, 32, and 33 and a group of three rolls 31', 32', and 33', respectively. By this arrangement the dough 3 is moved by the rotation of the rolls, while the group of rolls 30' is swung to repeatedly widen and narrow the gaps, so that a web of dough that has a predetermined thickness is discharged from the outlet.

In this third embodiment the us of rolls that are hexagonal with rounded corners allows the friction between them and the dough 3 to be increased.

The friction between the rolls and the dough can be changed by changing the shape of the rolls, or by changing the rotating speed of each roll, or by changing the ratio of the rotating speed of the upper roll to that of the lower roll. These factors are appropriately selected according to parameters such as the characteristics of the dough and the amount of dough to be discharged.

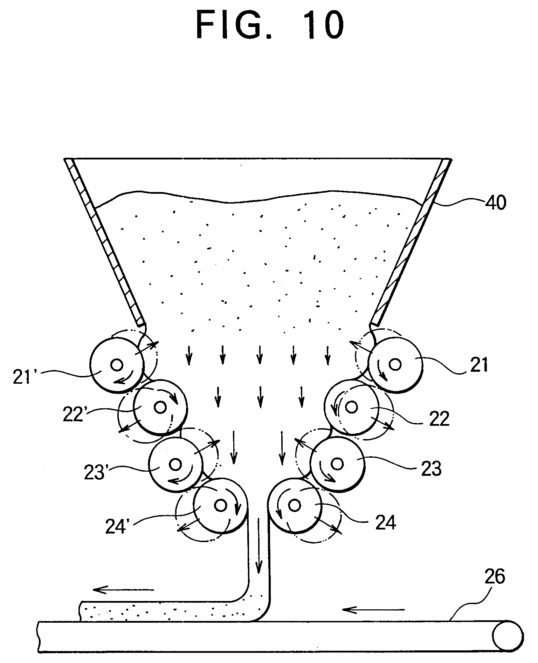

Fig. 10 shows a fourth embodiment of the invention. In this embodiment groups of rolls 21 to 24 and 21' to 24' are not mounted on swinging arms; rather, each of the rolls is independent of the others. Thus, each pair of opposite rolls are caused to recede from or approach each other independently of the other pairs, so that adjacent pairs of rolls can be moved in mutually opposite directions. This arrangement allows the distances between respective pairs of opposite rolls to be increased and decreased at the same time so that adjacent pairs of rolls move in opposite directions; i.e. when one pair of rolls are moving toward each other an adjacent pair of rolls are moving away from each other. As a result, pressure is applied to or removed from the dough at different levels, as the rolls all rotate in directions to urge the dough downwards, so that the dough can be discharged more effectively.

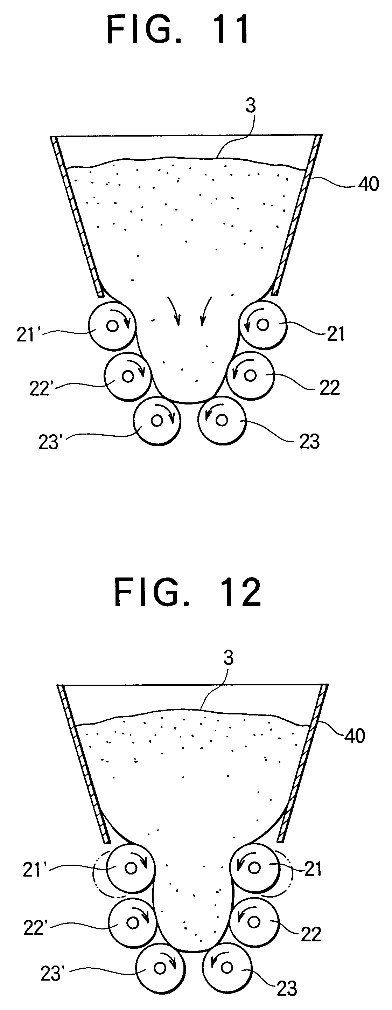

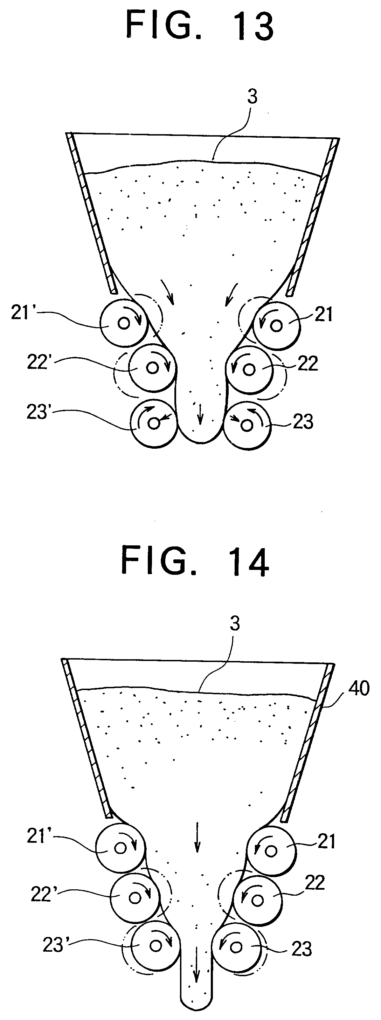

Figs. 11 to 14 show a fifth embodiment of the invention. In this embodiment groups of rolls jointly pull down and press the dough 3, so that the dough can be smoothly fed down. That is, first the pair of rolls 21 and 21' are caused to approach each other, as in Fig. 12. Then the same pair of rolls are caused to recede from each other, while the pair of rolls 22 and 22' are caused to approach each other, as in Fig. 13. Then, when the pair of rolls 22 and 22' are caused to recede from each other, the pair of rolls 23 and 23' are caused to approach each other, as in Fig. 14. Thus the pairs of rolls are moved so that the pressing movement is transmitted from an upper pair of rolls to the next lower pair. By this arrangement the compressed portion in the dough moves from an upper pair to the next lower pair, so that feeding of the dough is speeded up. Additionally, the force applied by the surfaces of the rolls to feed the dough is continuously applied, so that the dough is effectively fed by the force and thus discharged.

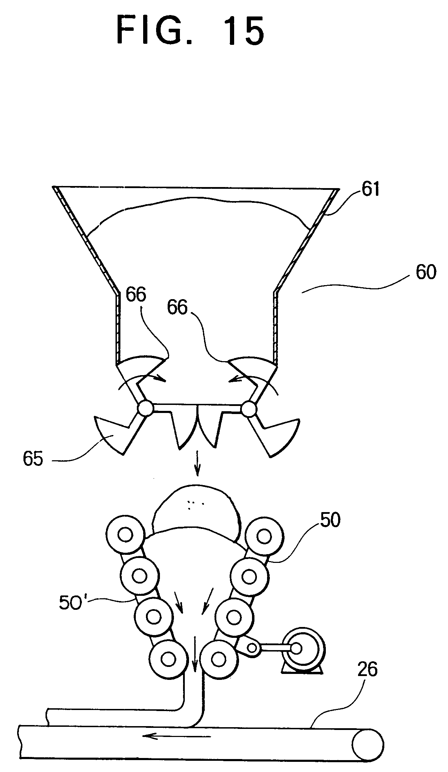

Fig. 15 shows a sixth embodiment of the invention. In this embodiment, while one group of rolls 50' is fixed, another group of rolls 50 is swung by a motor to widen and narrow the distances between the groups of the rolls. The rolls are arranged such that a roll in one group corresponds to a roll in another group to form a pair of rolls at the same level in terms of height. A dough-supplying apparatus 60 is located above the rolls, comprising a hopper 61 and a pair of cutters 65. The cutters 65 are positioned opposite each other at the bottom of the hopper 61, and are rotatable. A knife portion comprising one or more knives is provided at the end of each cutter 65. When the cutters are rotated, pieces of the dough in the hopper 61 are cut and fall onto the dough that has previously been supplied to the pair of groups of rolls 50, 50'. The dough is then discharged through the gap between the lowest pair of rolls to form a web of dough, and is conveyed by a conveyor 26 for subsequent treatment.

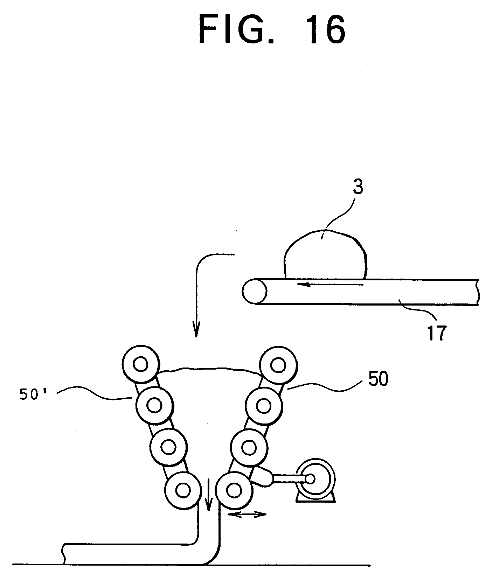

Fig. 16 shows a seventh embodiment of the invention. In this embodiment no hopper is located above the groups of rolls 50, 50'. A conveyor 17 feeds a mass of the dough 3 and supplies it between the groups of rolls.

In the embodiments above, a pair of rolls, or pairs of rolls, are used to discharge the dough therebetween. However, a pair of conveyors or pairs of conveyors, may be used instead of the pair of rolls or pairs of rolls. For example, each of the groups of rolls 20, 20' in Fig. 8 may be replaced by a plurality of conveyors, e.g., two or three conveyors.

As described above, a pair of groups of rolls comprises rolls positioned vertically. It has also been explained that the rotating speeds of the rolls gradually increase in the direction from the upper to the lower rolls. However, this invention is not limited to such an arrangement. Thus, the difference between the rotating speeds of the rolls can be determined based on conditions such as the dough material. Also, in the above described embodiments the rolls are always rotated. However, the rolls can be intermittently rotated in response to the widening and narrowing of the distances between the pairs of rolls.

## Claims

1. A method of feeding dough, comprising the steps of providing at least one horizontally opposed pair of feeding means (2,2') that are rotatable in opposite directions to feed dough downwardly therebetween, characterized by repeatedly increasing and decreasing the distance between said pair of means as the dough is discharged through the gap between them, thereby preventing shear stress in the dough at the entry point between the feeding means from being increased, and continuously discharging a web of dough having a substantially uniform thickness through the gap between the pair of means.

2. A method as claimed in claim 1, wherein said feeding means are rolls (2,2').

3. A method as claimed in claim 1, wherein said feeding means are conveyors.

4. A method as claimed in any of claims 1 to 3, wherein the said feeding means (2,2') are located at the bottom opening of a hopper (1).

5. A method as claimed in any preceding claim, including changing the circumferential speeds of the said pair of feeding means.

6. A method as claimed in any preceding claim, including changing the speeds of the increase and decrease of the distance between the said pair of feeding means.

7. Apparatus for feeding dough, comprising at least one horizontally opposed pair of feeding means (2,2'), which are rotatable in opposite directions to feed dough downwardly therebetween characterised by means for repeatedly increasing and decreasing the distance between said pair of feeding means as the dough is discharged through the gap between them, whereby shear stress in the dough at the entry point between the rotatable means is prevented from being increased, and the dough is stably and continuously discharged through the gap between the pair of feeding means to form a web of dough that has a substantially uniform thickness.

8. Apparatus as claimed in claim 7, wherein the said feeding means are rolls.

9. Apparatus as claimed in claim 7, wherein the said feeding means are conveyors.

10. Apparatus as claimed in claim 7 or 8, wherein the said feeding means comprises at least two pairs of rolls provided in a plurality of tiers.

11. Apparatus as claimed in any of claims 7 to 10, wherein the said feeding means are located at the bottom opening of a hopper.

12. Apparatus as claimed in any of claims 7 to 12, wherein the said means for changing the distance between the said feeding means comprises at least one swinging arm carrying one or more of said feeding means.

13. Apparatus as claimed in any of claims 7 to 12, wherein the said means for changing the distance between the said feeding means is arranged so that pressing of the dough occurs sequentially between successive pairs of feeding means in the downward direction.

14. Apparatus as claimed in any of claims 7 to 13, wherein the said means for changing the distance between the said feeding means is arranged so that the distances between each vertically adjacent pair of feeding means changes in mutually opposite senses.

15. Apparatus as claimed in any of claims 7 to 14, wherein the cross-sectional shape of the rolls is circular or polygonal.

## Patentansprüche

1. Verfahren zum Zuführen von Teig, aufweisend die Schritte des Vorsehens von mindestens einem sich horizontal gegenüberliegenden Paar von Zuführvorrichtungen (2,2'), die in entgegengesetzten Richtungen drehbar sind, um zwischen sich Teig nach unten zuzuführen, dadurch gekennzeichnet, daß wiederholt der Abstand zwischen diesem Paar von Vorrichtungen vergrößert und verkleinert wird, während der Teig durch die Lücke bzw. den Spalt zwischen ihnen ausgeworfen wird, wodurch eine Erhöhung der Scherbeanspruchung im Teig am Eintrittspunkt zwischen den Zuführvorrichtungen vermieden wird und eine Teigbahn mit einer im wesentlichen einheitlichen Dicke durch die Lücke zwischen dem Paar von Vorrichtungen kontinuierlich ausgeworfen wird.

2. Verfahren nach Anspruch 1, wobei die Zuführvorrichtungen Walzen (2,2') sind.

3. Verfahren nach Anspruch 1, wobei die Zuführvorrichtungen Fördervorrichtungen oder Förderbänder sind.

4. Verfahren nach einem der Ansprüche 1 bis 3, wobei die Zuführvorrichtungen (2,2') sich an der unteren Öffnung eines Trichters (1) befinden.

5. Verfahren nach einem der vorhergehenden Ansprüche, einschließend das Ändern der Umfangsgeschwindigkeiten des Paars von Zuführvorrichtungen.

6. Verfahren nach einem der vorhergehenden Ansprüche, einschließend das Ändern der Geschwindigkeiten, in welchen der Abstand zwischen dem Paar von Zuführvorrichtungen vergrößert und verkleinert wird.

7. Einrichtung zum Zuführen von Teig, aufweisend wenigstens ein sich horizontal gegenüberliegendes Paar von Zuführvorrichtungen (2,2'), welche in entgegengesetzte Richtungen drehbar sind, um Teig zwischen sich nach unten zuzuführen, gekennzeichnet durch eine Vorrichtung zum wiederholten Vergrößern und Verkleinern des Abstands zwischen dem Paar von Zuführvorrichtungen, während der Teig durch die Lücke bzw. den Spalt zwischen ihnen ausgeworfen wird, wodurch eine Erhöhung der Scherbeanspruchung im Teig am Eintrittspunkt zwischen den Zuführvorrichtungen vermieden wird und eine Teigbahn mit einer im wesentlichen einheitlichen Dicke durch die Lücke zwischen dem Paar von Vorrichtungen kontinuierlich ausgeworfen wird.

8. Einrichtung nach Anspruch 7, wobei die Zuführvorrichtungen Walzen sind.

9. Einrichtung nach Anspruch 7, wobei die Zuführvorrichtungen Fördervorrichtungen oder Förderbänder sind.

10. Einrichtung nach Anspruch 7 oder 8, wobei die Zuführvorrichtungen mindestens zwei Paar von Walzen aufweisen, die in einer Vielzahl von Positionen bzw. Höhenlagen vorgesehen sind.

11. Einrichtung nach einem der Ansprüche 7 bis 10, wobei sich die Zuführvorrichtungen an der unteren Öffnung eines Trichters befinden.

12. Einrichtung nach einem der Ansprüche 7 bis 12, wobei die Vorrichtung zum Ändern des Abstands zwischen den Zuführvorrichtungen mindestens einen Schwenkarm aufweist, der eine oder mehrere der Zuführvorrichtungen trägt.

13. Einrichtung nach einem der Ansprüche 7 bis 12, wobei die Vorrichtung zum Ändern des Abstands zwischen den Zuführvorrichtungen so angeordnet ist, daß nacheinander ein Zusammendrücken des Teigs zwischen hintereinanderliegenden Paaren von Zuführvorrichtungen nach unten erfolgt.

14. Einrichtung nach einem der Ansprüche 7 bis 13, wobei die Vorrichtung zum Ändern des Abstands zwischen den Zuführvorrichtungen so angeordnet ist, daß sich die Abstände zwischen jedem vertikal nebeneinanderliegenden Paar von Zuführvorrichtungen in einander entgegengesetzte Richtungen ändern.

15. Einrichtung nach einem der Ansprüche 7 bis 14, wobei die Querschnittform der Walzen kreisförmig oder polygonal ist.

## Revendications

1. Procédé d'alimentation en pâte, comprenant les étapes dans lesquelles on utilise au moins une paire de moyens d'alimentation (2,2') opposés horizontalement qui peuvent tourner dans des sens opposés pour faire descendre de la pâte entre eux, caractérisé par l'augmentation et la diminution répétées de la distance entre ladite paire de moyens pendant que la pâte est déchargée à travers l'espace les séparant, afin d'empêcher l'accroissement d'une contrainte de cisaillement dans la pâte au point d'entrée entre les moyens d'alimentation, et la décharge en continu d'une bande de pâte ayant une épaisseur sensiblement uniforme vers l'espace entre la paire de moyens.

2. Procédé selon la revendication 1, dans lequel lesdits moyens d'alimentation sont des rouleaux (2,2').

3. Procédé selon la revendication 1, dans lequel lesdits moyens d'alimentation sont des transporteurs.

4. Procédé selon l'une quelconque des revendications 1 à 3, dans lequel lesdits moyens d'alimentation (2,2') sont placés à l'ouverture du fond d'une trémie (1).

5. Procédé selon l'une quelconque des revendications précédentes, comprenant une modification des vitesses circonférentielles de ladite paire de moyens d'alimentation.

6. Procédé selon l'une quelconque des revendications précédentes, comprenant une modification de vitesse de l'augmentation et de la diminution de la distance entre ladite paire de moyens d'alimentation.

7. Appareil pour l'alimentation en pâte, comportant au moins une paire de moyens d'alimentation (2,2') opposés horizontalement, qui peuvent tourner dans des sens opposés pour faire descendre de la pâte entre eux, caractérisé par des moyens pour augmenter et diminuer de façon répétée la distance comprise entre ladite paire de moyens d'alimentation pendant que la pâte est déchargée à travers l'espace les séparant, de manière à empêcher l'accroissement d'une contrainte de cisaillement dans la pâte au point d'entrée entre les moyens pouvant tourner, et la pâte est déchargée de façon stable et en continu à travers l'espace entre la paire de moyens d'alimentation pour former une bande de pâte qui a une épaisseur sensiblement uniforme.

8. Appareil selon la revendication 7, dans lequel lesdits moyens d'alimentation sont des rouleaux.

9. Appareil selon la revendication 7, dans lequel lesdits moyens d'alimentation sont des transporteurs.

10. Appareil selon la revendication 7 ou 8, dans lequel lesdits moyens d'alimentation comprennent au moins deux paires de rouleaux disposés en plusieurs rangs.

11. Appareil selon l'une quelconque des revendications 7 à 10, dans lequel lesdits moyens d'alimentation sont placés à l'ouverture du fond d'une trémie.

12. Appareil selon l'une quelconque des revendications 7 à 12, dans lequel lesdits moyens pour modifier la distance entre lesdits moyens d'alimentation comprennent au moins un bras oscillant portant un ou plusieurs desdits moyens d'alimentation.

13. Appareil selon l'une quelconque des revendications 7 à 12, dans lequel lesdits moyens destinés à modifier la distance entre lesdits moyens d'alimentation sont agencés de façon qu'un pressage de la pâte ait lieu séquentiellement entre des paires successives de moyens d'alimentation dans le sens vers le bas.

14. Appareil selon l'une quelconque des revendications 7 à 13, dans lequel lesdits moyens destinés à modifier la distance entre lesdits moyens d'alimentation sont agencés de façon que les distances entre toutes les paires, verticalement adjacentes, de moyens d'alimentation varient dans des sens mutuellement opposés.

15. Appareil selon l'une quelconque des revendications 7 à 14, dans lequel la forme en section transversale des rouleaux est circulaire ou polygonale.
